# EUROPÄISCHE PATENTSCHRIFT

(11) **EP 0 639 262 B1**
(45) Veröffentlichungstag und Bekanntmachung des Hinweises auf die Patenterteilung: **17.04.1996**
(21) Anmeldenummer: 93909346.4
(22) Anmeldetag: 06.05.1993
(51) Int. Cl.: G01F 3/00, G01F 25/00, G01P 13/00

(54) **VORRICHTUNG ZUM TESTEN DER FUNKTIONSFÄHIGKEIT EINER ANLAGE ZUM DETEKTIEREN VON IN EINEM PARTIKELSTROM MITGEFÜHRTEN, WÄRMESTRAHLUNG EMITTIERENDEN, TEILCHEN**
DEVICE FOR TESTING THE OPERABILITY OF A SYSTEM FOR DETECTING HEAT-RADIATING PARTICLES CARRIED IN A PARTICLE STREAM
DISPOSITIF POUR TESTER L'ADTITUDE AU FONCTIONNEMENT D'UNE INSTALLATION VISANT A DETECTER DES PARTICULES EMETTANT UN RAYONNEMENT THERMIQUE, ENTRAINEES DANS UN FLUX PARTICULAIRE

(30) Priorität: 06.05.1992 AT 924/92
(43) Veröffentlichungstag der Anmeldung: 22.02.1995
(73) Patentinhaber: SCHIRNHOFER, Leo, A-2564 Weissenbach/Tr (AT)
(72) Erfinder: RATH, Gerhard, A-8786 Rottenmann (AT)
(74) Vertreter: Gibler, Ferdinand, Dipl.Ing. Dr. techn.
(86) Internationale Anmeldenummer: AT9300077
(87) Internationale Veröffentlichungsnummer: WO9322630

(56) Entgegenhaltungen:
- WO-A-85/01141
- DE-A- 2 914 588
- DE-A- 3 817 607

## Beschreibung

Die Erfindung betrifft eine Vorrichtung zum Testen der Funktionsfähigkeit einer Anlage zum Detektieren von in einem Partikelstrom mitgeführten, Wärmestrahlung emittierenden, z.B. glühenden bzw. glimmenden Teilchen, mit wenigstens zwei voneinander räumlich getrennten. am Umfang eines vom Partikelstrom durchströmten Rohres angeordneten Detektoren. wobei jeder Detektor in einer gegen den Partikelstrom mit einer zumindest für die Wärmestrahlung durchlässigen Abdeckscheibe abgeschirmten Kammer angeordnet ist, sowie ein entsprechendes Verfahren unter Verwendung der Vorrichtung.

Bei der Materialherstellung oder der Materialbearbeitung insbesonders in der metallverarbeitenden Industrie werden viele Partikel freigesetzt. welcher Partikelstrom im allgemeinen über ein Rohr abgeführt und beispielsweise einem Filter zugeführt wird. Um in diesem Partikelstrom mitgeführte erhitzte oder glühende Teilchen festzustellen. ist dieses Rohr mit Detektoren versehen. welche über eine Meldeeinrichtung die detektierten Partikel signalisieren.

Um ein sicheres Arbeiten mit solchen Einrichtungen zu gewährleisten, ist natürlich das Wissen über ein einwandfreies Funktionieren derselben unerläßlich.

So ist beispielsweise bei einer derartigen Einrichtung ein Selbsttesverfahren bekannt. bei welchem eine Leuchtdiode, deren Licht die dem Sensor vorgesetzte Filterscheibe praktisch nicht durchdringt, einen kurzen Lichtblitz aussendet, um zu testen, ob der Sensor auch anspricht. Damit wird ausschließlich die Funktionsfähigkeit des Sensors an sich festgestellt. Den allerdings in der Praxis am häufigsten auftretenden Defekt. nämlich eine Verschmutzung oder Beschädigung der Filterscheibe kann diese Einrichtung nicht erkennen.

Weiters ist aus der DE-A1-29 14 588 eine Einrichtung zur Untersuchung oder Prüfung der Empfindlichkeit von Funkenmeldern bekannt. In einem Ausführungsbeispiel dieser Schrift sind innerhalb eines durchströmbaren Kanals mehrere gegen Verschmutzung geschützte Leuchtdioden auf einer Seite und ein Funkenmelder auf der gegenüberliegenden Seite angeordnet. Weiters ist zusätzlich ein Meßwandler auf derselben Seite wie der Funkenmelder vor Verstaubung geschützt in die Wandung des Kanals eingelassen, sodaß er mit von allen Leuchtdioden herrührendem Licht beaufschlagbar ist. Das Ausgangssignal des Meßwandlers wird zur Regelung des Leuchtdiodenstromes verwendet.

Aufgabe der Erfindung ist es daher unter Vermeidung der genannten Nachteile und aufwendiger Vorrichtungen ein Verfahren sowie eine Vorrichtung zu schaffen, welche auf einfachem Weg jede Beeinträchtigung einer erforderlichen Detektion feststellt.

Die Erfindung löst die Aufgabe dadurch, daß jedem Detektor ein ebenfalls in der Kammer angeordneter Sender zugeordnet ist, und daß jeder Sender und Detektor mit einer zentralen Schaltstelle verbunden ist.

Vorteilhafterweise ist der Sender als eine z.B. im Infraror- oder sichtbaren Bereich arbeitende Lichtquelle ausgebildet, wobei vorzugsweise der Empfindlichkeitsbereich des Detektors der Wellenlänge des von der Lichtquelle emittierenden Lichtes angepaßt ist.

Ein weiterers Merkmal der Erfindung ist es, daß mehrere, jeweils Sender und Detektor aufnehmende Kammern über die Länge des den Partikelstrom führenden Rohres verzeilt angeordnet sind, wobei jeweils zwei Kammern einander gegenüberliegen.

Das erfindungsgemäß vorgesehene Verfahren unter Verwendung der erfindungsgemäßen Vorrichtung ist dadurch gekennzeichnet, daß das von dem in einer Kammer angeordneten Sender ausgesandte Testsignal von dem in mindestens einer anderen, vorzugsweise dergegenüberliegenden Kammer angeordneten Detektor empfangen und an eine zentrale Schaltstelle weitergeleitet wird, welche einen Vergleich des bzw. der empfangenen Signale mit dem Testsignal durchführt.

Ein abschließendes Merkmal der Erfindung ist es, daß die Sendeleistung jedes Senders variable ist und mehrere Testläufe hintereinander mit verschiedener Intensität durchgeführt werden.

Die Erfindung wird nun anhand eines Ausführungsbeispieles unter Zuhilfenahme der angeschlossenen Zeichnung näher beschrieben.

Es zeigt Fig.1 eine schematische Darstellung der erfindungsgemäßen Vorrichtung; Fig.2a,b und Fig.3 ein Funktionsschema der erfindungsgemäßen Vorrichtung; Fig.4 ein SignalVergleichsschaubild; und Fig. 5 eine weitere Variante der erfindungsgemäßen Vorrichtung.

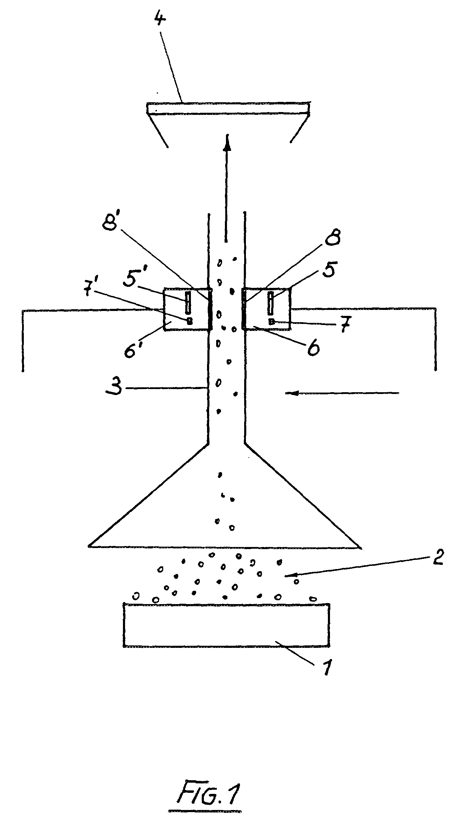

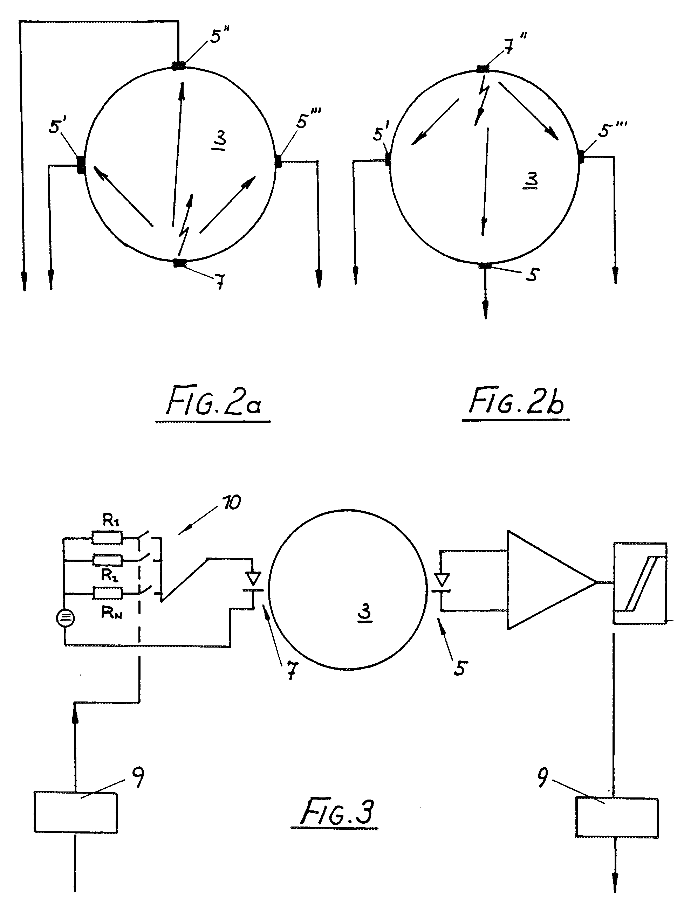

Die von einem Arbeitsplatz 1 austretenden Partikel 2 werden über einen Abzug in ein Rohr 3 gesaugt und einem Filter 4 zugeführt. Die das Rohr 3 durchströmenden Partikel 2 werden von an den Rohrwänden angeordneten Detektoren 5, 5' detektiert, welche glühende Partikel an eine nicht dargestellte zentrale Schaltstelle weitermelden. Die Detektoren 5,5' sind in Kammern 6,6' angeordnet. Ebenfalls in diesen Kammern sind Sender 7,7' angeordnet. Die Sender sowie die Detektoren sind gegenüber dem Partikelstrom durch Abdeckscheiben 8,8' abgeschirmt (Fig.1). Jede Abdeckscheibe 8,8' ist zumindest für Wärmestrahlung durchlässig und vorzugsweise auf einen den strahlenden Partikeln abgestimmten Wellenlängenbereich eingeschränkt. Um nun die Funktionsfähigkeit dieser Anlage zu testen, wird beispielsweise nach einer in Fig.2a,b dargestellten schematischen Anordnung vorgegangen. Dabei sind rund um das Rohr 3 sowohl vier Detektoren 5, 5' , 5'', 5''' als auch Sender 7, 7', 7'' , 7''' angeordnet. In Fig. 2a gibt der Sender 7 ein Testsignal in Form eines Lichtblitzes ab, welcher von den Detektoren 5',5'',5''' festgestellt und an die zentrale Schaltstelle weitergeleitet wird. Anschließend sendet, wie in Fig.2b dargestellt der Sender 7'' einen entsprechenden Lichtblitz aus, der von den Detektoren 5,5',5''' empfangen und weitergeleitet wird. Die Lichtquelle ist eine an den Wellenlängenempfindlichkeitsbereich der Detektoren angepaßte vorzugsweise Infrarotdiode, welche die Abdeckscheiben gut durchdringen kann. Es kann aber durchaus bei geeigneten Randbedingungen im sichtbaren Bereich gearbeitet werden. Jeder Sensor selbst ist mit einem Mikroprozessor bzw. Mikrokontroller ausgerüstet, wodurch mit der zentralen Schaltstelle beliebig Befehle und Daten ausgetauscht werden können.

Das Verfahren, bei welchem hintereinander von unterschiedlichen Sendern Lichtblitze abgegeben werden, dient dazu, um auch sicher feststellen zu können, ob ein Detektor ausgefallen ist.

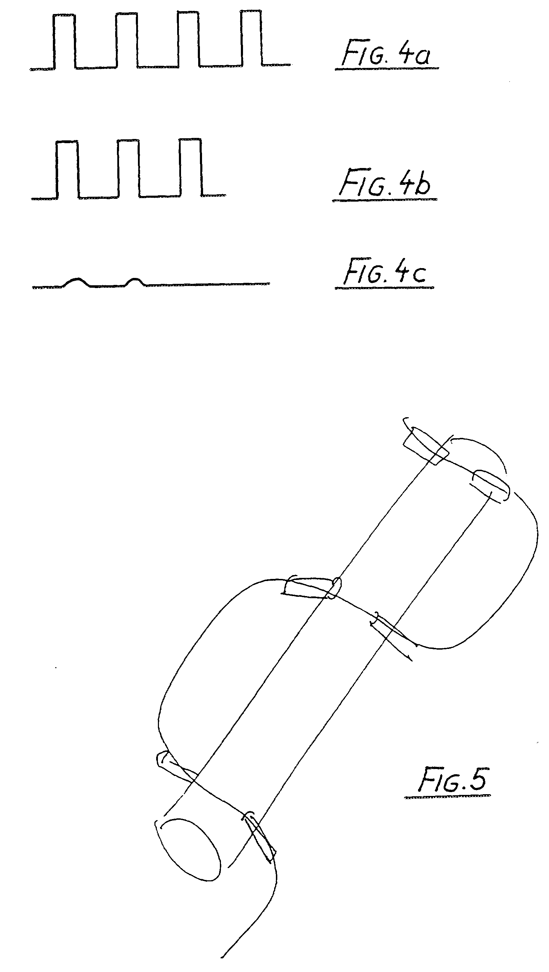

Fig. 4a zeigt das vom Sender ausgesandte Testsignal, Fig. 4b,c ein jeweils gut bzw. schlecht empfangenes Signal. Das in Fig. 4c dargestellte Signal zeigt nach Vergleich mit dem Testsignal an, daß die Funktionsfähigkeit der Anlage, bspw. durch Verschmutzung der Abdeckscheiben nicht mehr gegeben ist.

Ist also beispielsweise bei der Messung gemäß Fig. 2a. die Abdeckscheibe der Kammer 6 schlecht, so sind alle Rücksignale schlecht. Daraus läßt sich aber noch nicht erkennen, ob der Sender oder alle Detektoren defekt sind. Es wird daher noch wenigstens eine zweite Messung entsprechend Fig.2b durchgeführt. Wird nun nur vom Detektor 5 ein schlechtes Signal empfangen, hingegen liefern die beiden anderen Detektoren 5' und 5''' ein gutes Signal, ist eindeutig klar, daß der Detektor 5 oder die vor ihm angeordnete Abdeckscheibe defekt ist.

In diesem Fall wird eine Überprüfung der Anlage notwendig. Nach dem Erkennen einer Beeinträchtigung wird von der Zentrale ein Alarm oder eine Warnung abgegeben.

Fig.3 zeigt eine Schaltungsanordnung der Vorrichtung, mit der das Verfahren durchgeführt werden kann. Dabei läuft das von der Zentrale kommende Signal über ein Interface 9 und einen von nach Größe abgestuften Widerständen gebildeten Block 10 zu einem Sender 7. Über die Widerstände kann die Leistung des ausgesandten Signales variiert werden. Das vom Detektor 5 aufgefangene Signal wird wieder über ein Interface 9 der Zentrale zugeführt. Durch unterschiedlichen Einsatz der Widerstände kann auch eine Veränderung der Intensität durchgeführt werden.

In Fig. 5 ist eine weitere Ausführungsform der Vorrichtung dargestellt, wobei über die Länge des Rohres verteilt mehrere Sender und Detektoren tragende Kammern einander gegenüberliegen.

Grundsätzlich hängt die Anzahl der verwendeten Detektoren vom Durchmesser des Rohres ab.

## Patentansprüche

1. Vorrichtung zum Testen der Funktionsfähigkeit einer Anlage zum Detektieren von in einem Partikelstrom (2) mitgeführten, Wärmestrahlung emittierenden, z.B. glühenden bzw. glimmenden Teilchen, mit wenigstens zwei voneinander räumlich getrennten, am Umfang eines vom Partikelstrom (2) durchströmten Rohres (3) angeordneten Detektoren (5, 5', 5', 5'''), wobei jeder Detektor (5, 5', 5'', 5''') in einer gegen den Partikelstrom (2) mit einer zumindest für die Wärmestrahlung durchlässigen Abdeckscheibe (8, 8') abgeschirmten Kammer (6, 6') angeordnet ist, **dadurch gekennzeichnet,** daß jedem Detektor (5, 5', 5'', 5''') ein ebenfalls in der Kammer (6, 6') angeordneter Sender (7, 7', 7'', 7''') zugeordnet ist, und daß jeder Sender (7, 7', 7'', 7''') und Detektor (5, 5', 5'', 5''')mit einer zentralen Schaltstelle verbunden ist.

2. Vorrichtung nach Anspruch 1, **dadurch gekennzeichnet,** daß der Sender (7, 7', 7'', 7''') als eine z.B. im Infrarot- oder sichtbaren Bereich arbeitende Lichtquelle ausgebildet ist, wobei vorzugsweise der Empfindlichkeitsbereich des Detektors (5, 5', 5'',5''') der Wellenlänge des von der Lichtquelle emittierenden Lichtes angepaßt ist.

3. Vorrichtung nach Anspruch 1, **dadurch gekennzeichnet,** daß mehrere, jeweils Sender (7, 7', 7'', 7''') und Detektor (5, 5', 5'', 5''') aufnehmende Kammern (6, 6') über die Länge des den Partikelstrom (2) führenden Rohres (3) verteilt angeordnet sind, wobei jeweils zwei Kammern (6, 6') einander gegenüberliegen.

4. Verfahren zum Testen der Funktionsfähigkeit einer Anlage nach Anspruch 1, **dadurch gekennzeichnet,** daß das von dem in einer Kammer (6, 6') angeordneten Sender (7, 7', 7'', 7''') ausgesandte Testsignal von dem in mindestens einer anderen, vorzugsweise der gegenüberliegenden Kammer (6, 6') angeordneten Detektor (5, 5', 5'', 5''') empfangen und an eine zentrale Schaltstelle weitergeleitet wird, welche einen Vergleich des bzw. der empfangenen Signale mit dem Testsignal durchführt.

5. Verfahren nach Anspruch 4, **dadurch gekennzeichnet,** daß die Sendeleistung jedes Senders (7, 7', 7'', 7''') variabel ist.

6. Verfahren nach Anspruch 4 oder 5, **dadurch gekennzeichnet,** daß mehrere Testläufe hintereinander mit verschiedener Intensität durchgeführt werden.

## Claims

1. Device for testing the operability of a system for detecting particles which are carried in a particle stream (2), and which emit thermal radiation, for example incandescent or glowing particles, having at least two detectors (5, 5', 5'', 5''') which are spatially separated from one another and which are disposed at the periphery of a tube (3) through which the particle stream (2) flows, each detector (5, 5', 5'', 5''') being disposed in a chamber (6, 6') screened off against the particle stream (2) by a cover plate (8, 8') which is transmissive at least for the thermal radiation, characterized in that an emitter (7, 7', 7'', 7''') which is likewise disposed in the chamber (6, 6') is associated with each detector (5, 5', 5'', 5'''), and in that each emitter (7, 7', 7'', 7''') and detector (5, 5', 5'', 5''') are connected to a central switching station.

2. Device according to Claim 1, characterized in that the emitter (7, 7', 7'', 7''') is designed as a light source operating, for example, in the infrared or visible range, the sensitivity range of the detector (5, 5', 5'', 5''') preferably being matched to the wavelength of the light being emitted by the light source.

3. Device according to Claim 1, characterized in that a plurality of chambers (6, 6') accommodating in each instance emitter (7, 7', 7'', 7''') and detector (5, 5', 5'', 5''') are disposed so as to be distributed over the length of the tube (3) carrying the particle stream (2), in each instance two chambers (6, 6') being situated opposite one another.

4. Process for testing the operability of a system according to Claim 1, characterized in that the test signal emitted by the emitter (7, 7', 7'', 7''') situated in a chamber (6, 6') is received by the detector (5, 5', 5'', 5''') disposed in at least one other, preferably the opposite, chamber (6, 6') and is further conducted to a central switching station, which carries out a comparison of the received signal or signals with the test signal.

5. Process according to Claim 4, characterized in that the emission power of each emitter (7, 7', 7'', 7''') is variable.

6. Process according to Claim 4 or 5, characterized in that a plurality of test runs are carried out in succession with differing intensity.

## Revendications

1. Dispositif pour tester l'aptitude au fonctionnement d'une installation en vue de détecter des particules entraînées par un courant de particules (2), émettant un rayonnement thermique, par exemple des particules incandescentes ou luminescentes, avec au moins deux détecteurs (5, 5', 5'', 5''') séparés spatialement l'un de l'autre, disposés à la périphérie d'un tube (3) parcouru par un courant de particules (2), chaque détecteur (5, 5', 5'', 5''') étant disposé dans une chambre (6, 6') isolée vis-à-vis du courant de particules (2), à l'aide d'un disque de recouvrement (8, 8') perméable au moins au rayonnement thermique, caractérisé en ce que, à chaque détecteur (5, 5', 5'', 5'''), est associé un émetteur (7, 7',7'', 7''') disposé également dans la chambre (6, 6') et en ce que chaque émetteur (7, 7', 7'', 7''') et chaque détecteur (5, 5', 5'', 5''') est relié à un emplacement de raccordement central.

2. Dispositif selon la revendication 1, caractérisé en ce que l'émetteur (7, 7', 7'', 7''') est réalisé sous forme de source lumineuse travaillant, par exemple, dans la plage de l'infrarouge ou de la lumière visible, de préférence la plage de sensibilité du détecteur (5, 5', 5'', 5''') étant adaptée à la longueur d'onde de la lumière émise par la source lumineuse.

3. Dispositif selon la revendication 1, caractérisé en ce que, plusieurs chambres (6, 6'), recevant chacune des émetteurs (7, 7', 7'', 7''') et des détecteurs (5, 5', 5'', 5'''), sont réparties sur la longueur du tube (3) guidant le courant de particules (2), les chambres de chaque paire (6, 6') étant placées à l'opposé l'une de l'autre.

4. Procédé pour tester l'aptitude au fonctionnement d'une installation selon la revendication 1, caractérisé en ce que le signal de test envoyé par l'émetteur (7, 7', 7'', 7''') disposé dans une chambre (6, 6') est capté par le détecteur (5, 5', 5'', 5''') disposé au moins dans une autre chambre (6, 6'), de préférence dans la chambre opposée, et est retransmis à un emplacement de raccordement central qui effectue une comparaison du ou des signaux reçus, avec le signal de test.

5. Procédé selon la revendication 4, caractérisé en ce que la puissance d'émission de chaque émetteur (7, 7', 7'', 7''') est variable.

6. Procédé selon la revendication 4 ou 5, caractérisé en ce que plusieurs déroulements de tests sont effectués les uns derrière les autres avec des intensités différentes.
